# EUROPEAN PATENT APPLICATION

(11) **EP 2 110 989 A1**
(43) Date of publication of application: **21.10.2009**
(21) Application number: 07290768.6
(22) Date of filing: 20.06.2007
(51) Int. Cl.: H04L 12/24

(54) **Alarm management in a telecommunication network**

(71) Applicant: Alcatel Lucent, 75008 Paris (FR)
(72) Inventor: Donadio, Pasquale, 80129 Napoli (IT); Paparella, Andrea, 21052 Busto Arsizio (Varese) (IT); Riglietti, Roberto, 20059 Vimergate (Milano) (IT)
(74) Representative: Colombo, Stefano Paolo

(57) **Abstract**

It is described a method of managing alarms traveling in a telecommunication network (TN). The method comprises, at an alarm surveillance device (ASD) cooperating with the telecommunication network: a) detecting an alarm flow (A); b) associating to the alarm flow (A) a frame (AP) comprising at least one alarm string; and c) transmitting the frame (AP) to a management terminal (MT). The method further comprises, at the management terminal (MT): d) associating to the frame (AP) an alarm voice message (AVM); and e) playing the alarm voice message (AVM) by means of an audio transmitter (TA).

## Description

### Field of the Invention

The present invention relates to the field of telecommunication networks. In particular, the present invention relates to a method and a telecommunication system for managing alarms in a telecommunication network.

### Background Art

It is well known that a telecommunication network comprises a plurality of network elements interconnected one another in order to transport traffic exchanged by users of the telecommunication network.

A telecommunication network is typically configured to cooperate with a Telecommunication Management Network (TMN), which is responsible to carry out a number of management operations upon the telecommunication network. ITU-T Recommendation M.3010 (02.2002), paragraph 9.5 discloses that a TMN has a hierarchical layered structure, each layer being responsible of performing a given set of management operations. Exemplary management operations performed by the TMN are:
- network performance management;
- network configuration management;
- accounting management;
- network security management; and
- alarm management.

In particular, it is known that alarm management comprises listening for possible alarms generated by one or more network element(s) when an event (such as an error, a failure, a congestion, etc.) occurs inducing abnormal operation of the network element(s). Upon detection of an alarm, the alarm is typically analyzed in order to trace the cause of the abnormal operation. Finally, suitable actions are taken for restoring normal operation of the network element(s).

Nowadays, alarm management is performed (together with the other management operations) at a management terminal, such as a PC, a workstation or the like. The management terminal is configured to communicate with all the network elements of the telecommunication network.

Typically, the management terminal has a display for visualizing a management graphic interface. Through the management graphic interface, an operator responsible of performing network management can both visualize management information and impart commands for performing management operations.

In particular, by referring to alarm management, each alarm detected at the management terminal induces the management terminal to visualize on the display an alarm message box at a given position of the management graphic interface. The operator may first read the alarm message box, and then impart commands for taking suitable actions for restoring normal operation of the network element(s). Commands may be imparted via the management graphic interface e.g. through a keyboard, a mouse or a touch-screen of the management terminal.

### Summary of the invention

The Applicant has noticed that the above known solution for performing alarm management has some drawbacks.

First of all, the operator may become aware that an alarm has been detected by the management terminal only when he looks at the display. Besides, even if he looks at the display, the operator may hardly see possible alarm message boxes, due to complexity of the management graphic interface which typically comprises a high number of graphical objects such as tabs, buttons, boxes, windows, etc.

Moreover, the above known solution is rather inconvenient for the operator when an alarm flow comprising a plurality of alarms is detected at the management terminal. Indeed, in this case the management terminal processes each single alarm in an independent way, and therefore it visualizes a separated alarm message box for each detected alarm. Therefore, the operator has to read a plurality of alarm message boxes and select among them the most significant ones. This is a rather complex and time consuming operation.

Moreover, it is likely that the operator does not see one or more of the alarm message boxes. Indeed, alarm message boxes are not usually displayed in an ordered way, so that they may overlap each other in such a way that one or more of them may be partially or totally hidden. This may disadvantageously induce the operator to make a wrong diagnosis of the alarm cause.

Accordingly, the Applicant has faced the problem of providing a method and a telecommunication system for managing alarms generated in a telecommunication network, which overcomes the aforesaid drawbacks.

In particular, the Applicant has faced the problem of providing a method and a telecommunication system for managing alarms generated in a telecommunication network, which substantially eliminates the risk that an operator does not realize that an alarm has been detected at the management terminal and which is more convenient for an operator, in particular when a flow of alarms is detected at the management terminal.

According to a first aspect, the present invention provides a method of managing alarms traveling in a telecommunication network. The method comprises, at an alarm surveillance device cooperating with the telecommunication network: a) detecting an alarm flow; b) associating to the alarm flow a frame comprising at least one alarm string; c) transmitting the frame to a management terminal. The method further comprises, at the management terminal: d) associating to the frame an alarm voice message; and e) playing the alarm voice message by means of an audio transmitter.

Preferably, step b) comprises generating alarm information based on the alarm flow by eliminating possible redundancies comprised in the alarm flow.

According to preferred embodiments, step b) comprises selecting the at least one alarm string from a set of predefined alarm strings.

Profitably, step d) comprises selecting the alarm voice message from a set of predefined voice messages, the alarm voice message being biunivocally associated to the frame.

Optionally, step c) comprises transmitting the frame through a web service.

According to preferred embodiments, the method further comprises, at the management terminal: f) receiving a voice command from an operator; g) associating to the voice command a further frame comprising at least one command string; h) transmitting the further frame to the alarm surveillance device; and, at the alarm surveillance device: i) associating to the further frame at least one command formatted according to a management protocol; and j) transmitting the at least one command to the telecommunication network.

According to the second aspect, the present invention provides an alarm surveillance device cooperating with a telecommunication network for managing alarms traveling in the telecommunication network. The alarm surveillance device is configured to a) detect an alarm flow; b) associate to the alarm flow a frame comprising at least one alarm string; and c) transmit the frame to a management terminal connected to the alarm surveillance device.

According to a third aspect, the present invention provides a management terminal configured to cooperate with an alarm surveillance device, the alarm surveillance device cooperating with a telecommunication network for managing alarms traveling in the telecommunication network. The management terminal is configured to: d) receive from the alarm surveillance device a frame comprising at least one alarm string; e) associate to the frame an alarm voice message; and f) play the alarm voice message by means of an audio transmitter.

According to a fourth aspect, the present invention provides a telecommunication system comprising a telecommunication network, an alarm surveillance device cooperating with the telecommunication network and a management terminal connected to the alarm surveillance device, wherein the alarm surveillance device is according to the second aspect, and wherein the management terminal is according to the third aspect.

### Brief description of the drawings

The present invention will become clearer by reading the following detailed description, given by way of example and not of limitation, to be read with reference to the accompanying drawings, wherein:
- Figure 1 schematically shows a telecommunication system configured to implement the method according to a first embodiment of the present invention;
- Figures 2a and 2b schematically show the encoder and the decoder of Figure 1, respectively;
- Figures 3a and 3b are flow charts of the operation of the encoder and the decoder of Figures 2a and 2b, respectively;
- Figure 4 schematically shows a telecommunication system configured to implement the method according to a second embodiment of the present invention;
- Figures 5a and 5b schematically show the network side codec and the operator side codec of Figure 4, respectively;
- Figures 6a and 6b are flow charts of the operation of the network side codec and the operator side codec of Figures 5a and 5b, respectively; and
- Figure 7 schematically shows a codec according to a further embodiment of the present invention.

### Detailed description of preferred embodiments of the invention

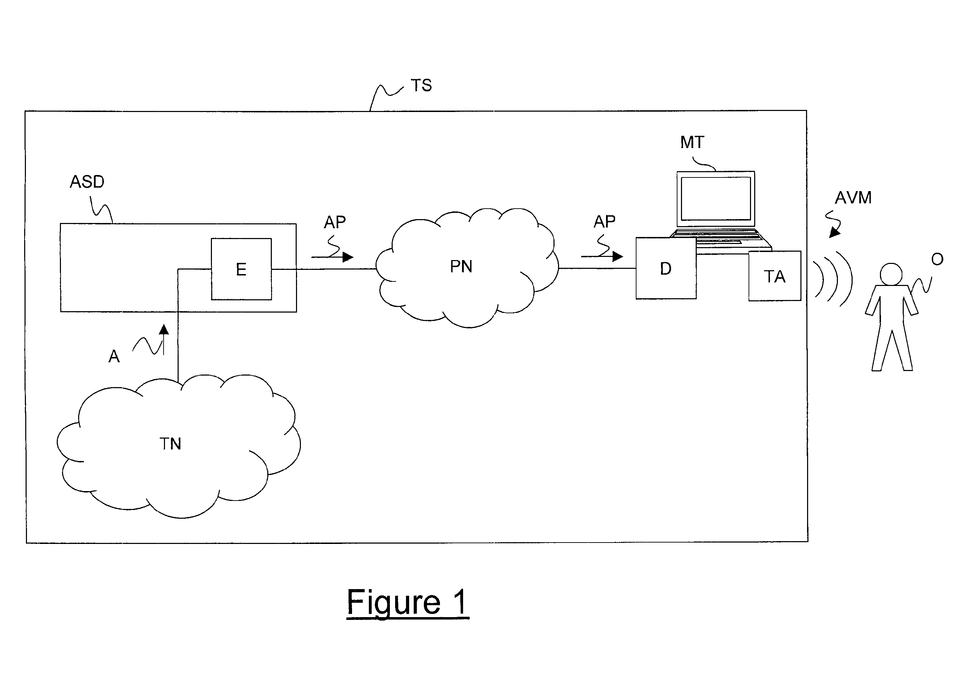

Figure 1 schematically shows a telecommunication system TS configured to implement the method according to a first embodiment of the present invention.

The telecommunication system TS of Figure 1 comprises a telecommunication network TN, which may comprise one or more packet-switched telecommunication networks (such as Ethernet, Internet, etc.) and/or one or more circuit-switched telecommunication network (such as SDH, Sonet, etc.).

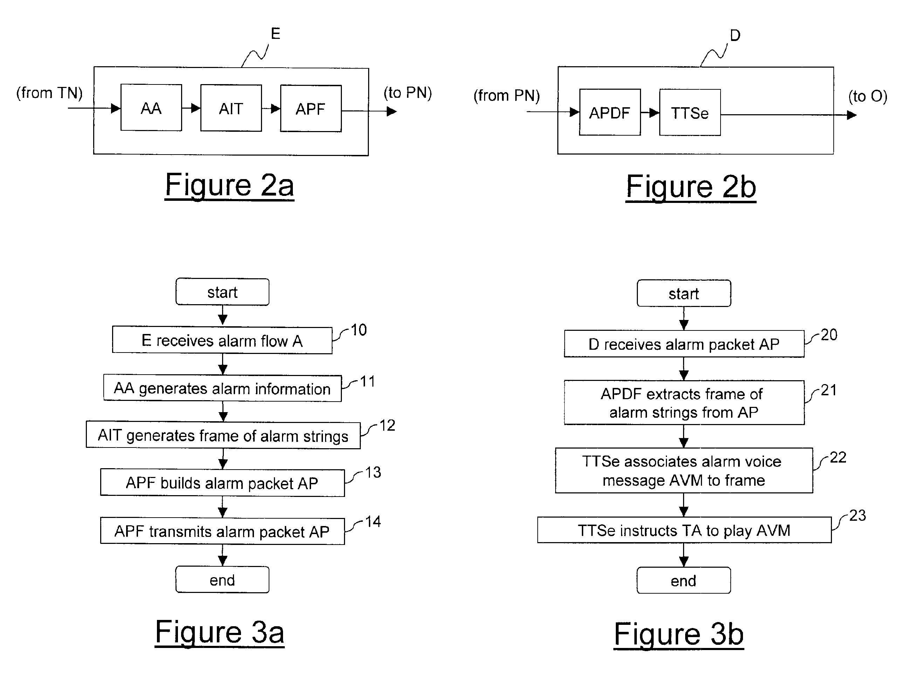

The telecommunication system TS further comprises an alarm surveillance device ASD connected to the telecommunication network TN. Advantageously, the alarm surveillance device ASD comprises an encoder E, whose structure and function will be described in further detail herein after by referring to Figures 2a and 3a.

Further, the telecommunication system TS comprises a management terminal MT. Advantageously, the management terminal MT comprises an audio transmitter TA (such as a speaker) allowing to play voice messages. Further, according to embodiments of the present invention, the management terminal MT comprises a decoder D, whose structure and function will be explained in detail herein after by referring to Figures 2b and 3b.

Moreover, the telecommunication system TS comprises a private network PN connecting the encoder E and the decoder D, i.e. the alarm surveillance device ASD and the management terminal MT. Preferably, the private network PN is a packet-switched network, e.g. an IP-based network.

Figure 2a schematically shows the structure of the encoder E according to an embodiment of the present invention. The encoder E preferably comprises a cascade of an alarm aggregator AA, an alarm information translator AIT and an alarm packet formatter APF.

By referring to Figure 3a, the operation of the encoder E will be now described in detail.

During a first step 10, the alarm surveillance device ASD receives an alarm flow A comprising alarms generated by one or more network element(s) of the telecommunication network TN, and it passes it to the encoder E. For instance, the alarm flow A may comprise alarms transported by SNMP (Simple Network Management Protocol), CMIP (Common Management Information Protocol), TPTAPS, etc., according to the type of network element(s) which generated the alarm flow A.

When the encoder E receives the alarm flow A, the alarm aggregator AA processes the alarm flow A for generating alarm information (step 11). Preferably, possible redundancies comprised in the alarms of the alarm flow A are deleted.

An example of the operation of the alarm aggregator AA will be now described in detail. It is assumed that, in a given time period, an alarm flow A is received at the alarm surveillance device ASD, which alarm flow A comprises alarms generated by an optical transmission port (OTPORT) supporting DWDM traffic and by a port OC12 supporting TDM traffic. Some of the alarms comprised in the alarm flow A are listed in Table I reported herein below.

**Table I**

| **AID** | **AIDTYPE** | **NTFCNCDE** | **OCRTM** |
|---|---|---|---|
| OTPORT-1-2-2-L1 | OTU2 | CR | 10-52-43 |
| OTPORT-1-2-2-L1 | OTU2 | CR | 10-53-13 |
| OTPORT-1-2-2-L1 | OTU2 | CR | 10-55-45 |
| OC12-1-1-9-4 | OC12 | MN | 10-56-10 |
| OC12-1-1-9-4 | OC12 | MN | 10-57-12 |
| OTPORT-1-2-2-L1 | OTU2 | CR | 10-58-15 |
| OC12-1-1-9-4 | OC12 | MN | 10-58-25 |
| OTPORT-1-2-2-L1 | OTU2 | CR | 10-59-45 |
| .... | | | |

Each row of Table I comprises information relating to a single alarm. In particular, each row comprises an AID field (alarm identifier), an AIDTYPE field (alarm type), a NTFCNCDE field (alarm criticality) and an OCRTM field (time stamp indicating the time at which the alarm has been generated). Each row comprises further information which are not shown in Table I since they are not relevant to the present description.

The alarm aggregator AA receives the information comprised in Table I and processes them, thus generating alarm information. Such alarm information is shown in Table II, which is reported herein below.

**Table II**

| **AID** | **AIDTYPE** | **NTFCNCDE** |
|---|---|---|
| OTPORT-1-2-2-L1 | OTU2 | CR (5) |
| OC12-1-1-9-4 | OC12 | MN (3) |

Preferably, in Table II the NTFCNCDE field (alarm criticality) comprises an information indicative of the number of alarms comprised in Table I and having a same alarm type (i.e. a same value of the AIDTYPE field). This is only exemplary, since other criteria for aggregating alarms of an alarm flow may be provided.

Then, the alarm aggregator AA forwards the alarm information to the alarm information translator AIT, which translates it in a predefined language (step 12), such as for instance XML (Extensible Markup Language). More particularly, translation is performed by associating to alarm information having a given content a respective frame of strings of the predefined language, which will be termed "alarm strings". Preferably, the alarm strings are selected from a set of predefined alarm strings. The alarm strings of a frame associated to the alarm information only depends on the content of the alarm information, and they are preferably independent of the management protocol(s) (SNMP, CMIP; TPTAPS, etc.) upon which the alarms comprised in the alarm flow A are based. In other words, alarms flows comprising alarms transported by different management protocols and having a same content are associated to frames comprising the same alarm strings.

For instance, in case the alarm information are those shown in the above Table II, the frame of alarm strings may be the following (under the assumption of using XML):

```
 <ALARM_SINTHESYS>
 <ALARM_STRING>
       <ALM_PARAM value="OTPORT-1-2-2-L1">AID</ALM_PARAM>
       <ALM_PARAM value="OTU2">AIDTYPE</ALM_PARAM>
       <ALM_PARAM value="CR(5)">NTFCNCDE</ALM_PARAM>
 </ALARM_STRING>
 <ALARM_STRING>
       < ALM_PARAM value="OC12-1-1-9-4">AID</ALM_PARAM>
       < ALM_PARAM value="OC12">AIDTYPE</ALM_PARAM>
       < ALM_PARAM value="MN(3)">NTFCNCDE</ALM_PARAM>
 </ALARM_STRING>
 </ALARM_SINTHESYS>
```

Then, during a successive step 13, the frame of alarm strings is forwarded to the alarm packet formatter APF, which encapsulates the frame in an alarm packet AP formatted according to a transport protocol supported by the private network PN. For instance, in case the private network PN is IP-based, the alarm packet AP may be formatted according to SOAP (Simple Object Access Protocol). In this case, transmission of the alarm packet AP may be advantageously performed through web services.

Then, the alarm packet AP is forwarded to the decoder D of the management terminal MT through the private network PN (step 14).

Figure 2b schematically shows the structure of the decoder D of Figure 1, according to an embodiment of the present invention. The decoder D preferably comprises a cascade of an alarm packet de-formatter APDF and a text-to-speech engine TTSe.

By referring to Figure 3b, the operation of the decoder D will be explained in detail.

When the decoder D receives an alarm packet AP transmitted by the encoder E through the private network PN (step 20), the alarm packet de-formatter APDF extracts from the alarm packet AP the frame of alarm strings generated by the alarm information translator AIT (step 21).

Then, the alarm packet de-formatter APDF forwards the frame of alarm strings to the text-to-voice engine TTSe, which associates an alarm voice message AVM to the frame (step 22). Preferably, during step 22 the text-to-voice engine TTSe selects the alarm voice message AVM from a set of pre-recorded voice messages. Preferably, each alarm voice message of the set of pre-recorded voice messages is biunivocally associated with a respective frame of alarm strings.

Then, during a successive step 23, the text-to-speech engine TTSe instructs the audio transmitter TA to play the selected alarm voice message AVM.

Therefore, the operator O listens to the alarm voice message AVM and, according to its content, he can determine the actions to be taken for restoring normal operation of the telecommunication network TN.

Therefore, differently from the above known solution wherein detection of each single alarm is graphically notified to the operator, detection of the alarm flow A is vocally notified to the operator O, and each alarm voice message corresponds to a whole alarm flow. This advantageously makes alarm management faster and more convenient for the operator O.

Indeed, the operator may become aware that an alarm has been detected also without looking at the display. Therefore, even if the management graphic interface displayed at the management terminal MT is very complex (i.e. it comprises a high number of graphical objects such as tabs, buttons, boxes, windows, etc.), the operator is not likely to miss the alarm message. Further, in case the management terminal MT is used only for performing alarm management, the alarm terminal MT does not require a large display for displaying the management graphic interface. Accordingly, the management terminal MT may be for instance a portable device provided with a small display, such as a mobile phone or a PDA. This also advantageously allows the operator to move while he monitors the management terminal MT and to perform remote monitoring of alarms.

Further, advantageously, even if the alarm flow A comprises a high number of alarms, the operator does not have to select the most relevant information and discard redundant information, since such an operation is performed by the alarm aggregator AA included in the encoder E. Further, advantageously, this allows to reduce network traffic associated to alarms, since no redundant information are transmitted from the alarm surveillance device to the management terminal.

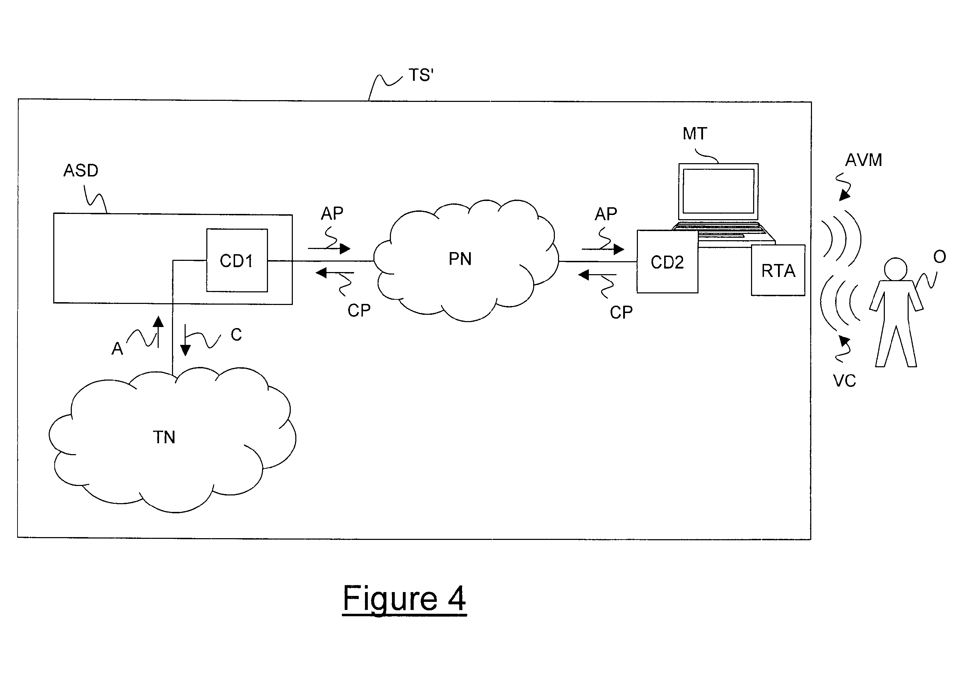

Figure 4 schematically shows a telecommunication system TS' configured to implement the method according to a second embodiment of the present invention.

The telecommunication system TS' of Figure 4 differs from the telecommunication system TS of Figure 1 in that:
- the alarm surveillance device ASD comprises, instead of the encoder E, a network side codec CD1;
- the management terminal MT comprises, instead of the decoder D, an operator side codec CD2; and
- the management terminal MT comprises, instead on the audio transmitter TA, an audio transmitter/receiver RTA, such as a telephone receiver.

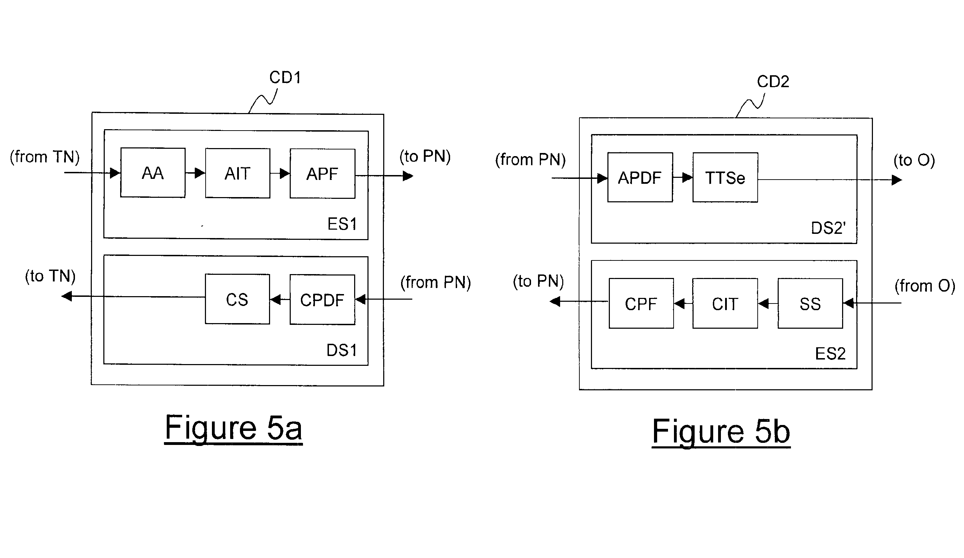

Figure 5b schematically shows the structure of the operator side codec CD2 according to an embodiment of the present invention. The operator side codec CD2 comprises an operator side encoder section ES2 and an operator side decoder section DS2.

The operator side decoder section DS2 is similar to the decoder D of Figure 2b, and its operation is similar to what described above by referring to Figure 3b. Accordingly, a detailed description will not be repeated.

The operator side encoder section ES2 preferably comprises a cascade of a speech synthesizer SS, a command information translator CIT and a command packet formatter CPF.

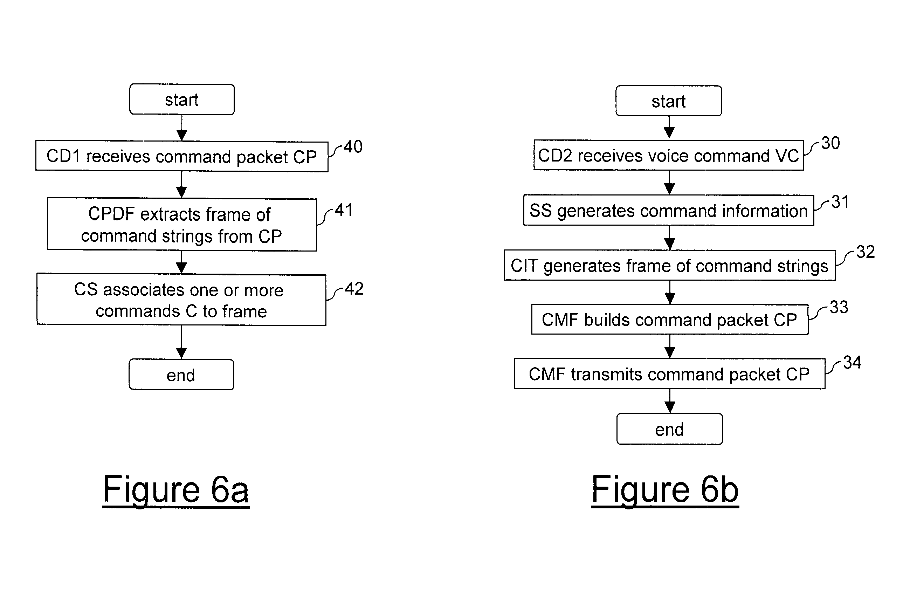

By referring to Figure 6b, the operation of the operator side encoder section ES2 will be now described in detail.

During a first step 30, the operator side encoder section ES2 receives a voice command VC imparted by the operator O through the audio transmitter/receiver RTA. Preferably, such a voice command VC is aimed to take one or more actions for restoring normal operation of the telecommunication network TN after detection of the alarm flow A. Preferably, the operator O selects the voice command to be imparted from a set of predefined voice commands.

When the operator side encoder section ES2 receives the voice command VC, the speech synthesizer SS translates the received voice command VC in corresponding command information (step 31).

Then, the speech synthesizer SS forwards the command information to the command information translator CIT, which translates it in a predefined language (step 32), such as the above mentioned XML. More particularly, translation is performed by associating to command information having a given content a respective frame of strings of the predefined language, which will be termed "command strings". Preferably, the command strings are selected from a set of predefined command strings. Preferably, each frame of command strings is biunivocally associated to a voice command of the set of predefined voice commands.

Then, during a successive step 33, the frame of command strings is forwarded to the command packet formatter CPF, which encapsulates the frame of command strings in a command packet CP formatted according to a transport protocol supported by the private network PN. For instance, in case the private network PN is IP-based, the command packet CP may be formatted according to the above mentioned SOAP. In this case, transmission of the command packet CP may be advantageously performed through web services.

Then, the command packet CP is forwarded to the operator side codec CD1 of the alarm surveillance device ASD through the private network PN (step 34).

Figure 5a schematically shows the structure of the network side codec CD1 according to an embodiment of the present invention. The network side codec CD1 comprises a network side encoder section ES1 and a network side decoder section DS1.

The network side encoder section ES1 is similar to the encoder E of Figure 2a, and its operation is similar to what described above by referring to Figure 3a. Accordingly, a detailed description will not be repeated.

The network side decoder section DS1 preferably comprises a cascade of a command packet de-formatter CPDF and a command scheduler CS.

By referring to Figure 6a, the operation of the network side decoder section DS1 will be now described in detail.

When the network side codec CD1 receives the command packet CP transmitted by the operator side codec CD2 through the private network PN (step 40), the command packet de-formatter CPDF extracts from the command packet CP the frame of command strings generated by the command information translator CIT (step 41).

Then, during step 42, the command packet de-formatter CPDF forwards the frame of command strings to the command scheduler CS, which, according to the content of the command strings, instructs the alarm managers (such as the SNMP manager, the CMIP manager, the TPTAPS manager, etc.) to transmit to the network elements of the telecommunication network TN suitable commands C formatted according to respective management protocols.

Therefore, advantageously, according to this second embodiment the operator not only receives alarm voice messages AVM, but he also can take actions for restoring normal operation of the telecommunication network TN by means of voice commands VC. Therefore, the operator does not have to press keys of a keyboard or operate a mouse or a touch screen, since he only has to pronounce a voice command by means of the audio transmitter/receiver of the management terminal. Therefore, taking actions for restoring normal operation of the telecommunication network is easier and faster than in the known solution.

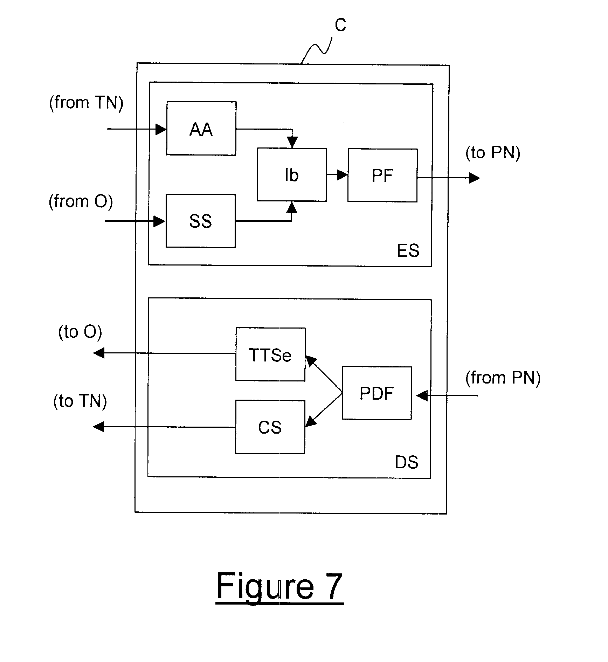

Even if, in the embodiments shown in Figure 4, the alarm surveillance device ASD and the management terminal MT comprise different codecs (i.e. the network side codec CD1 and the operator side codec CD2, respectively), according to a further embodiment of the present invention both the alarm surveillance device ASD and the management terminal MT may comprise a same codec CD. The structure of such a codec CD is schematically shown in Figure 7.

The codec CD comprises an encoder section ES and a decoder section DS.

The encoder section ES comprises an alarm aggregator AA, a speech synthesizer SS, an information translator IT and a packet formatter PF. Both the alarm aggregator AA and the speech synthesizer SS are connected at the input of the information translator IT.

The decoder section DS comprises a packet de-formatter PDF, a text-to-speech engine TTSe and a command scheduler CS. Both the text-to-speech engine TSSe and the command scheduler CS are connected at the output of the packet de-formatter PDF.

When the codec CD is comprised in the alarm surveillance device ASD, its operation is similar to the operation of the network side codec CD1 of Figure 4, which has been described above with reference to Figures 3a and 6a. In particular, the information translator IT acts as the alarm information translator AIT, the packet formatter PF acts as the alarm packet formatter APF and the packet de-formatter PDF acts as the command packet de-formatter CPDF.

On the other hand, when the codec CD is comprised in the management terminal MT, its operation is similar to the operation of the operator side codec CD2 of Figure 4, which has been described above with reference to Figures 3b and 6b. In particular, the information translator IT acts as the command information translator CIT, the packet formatter PF acts as the command packet formatter CPF and the packet de-formatter PDF acts as the alarm packet de-formatter APDF.

Therefore, according to this embodiment, the method of the present invention can be implemented by providing a single codec which can be indifferently used either at the alarm surveillance device and at the management terminal.

## Claims

1. A method of managing alarms traveling in a telecommunication network (TN), said method comprising, at an alarm surveillance device (ASD) cooperating with said telecommunication network:
a) detecting an alarm flow (A);
b) associating to said alarm flow (A) a frame comprising at least one alarm string;
c) transmitting said frame to a management terminal (MT); and said method further comprising, at said management terminal (MT):
d) associating to said frame an alarm voice message (AVM); and
e) playing said alarm voice message (AVM) by means of an audio transmitter (TA).

2. The method according to claim 1, wherein said step b) comprises generating alarm information based on said alarm flow (A) by eliminating possible redundancies comprised in said alarm flow (A).

3. The method according to any of claims 1 or 2, wherein said step b) comprises selecting said at least one alarm string from a set of predefined alarm strings.

4. The method according to claim 3, wherein said step d) comprises selecting said alarm voice message (AVM) from a set of predefined voice messages, said alarm voice message (AVM) being biunivocally associated to said frame.

5. The method according to any of the preceding claims, wherein said step c) comprises transmitting said frame through a web service.

6. The method according to any of the preceding claims, wherein said method further comprises, at said management terminal (MT):
f) receiving a voice command (VC) from an operator (O);
g) associating to said voice command (VC) a further frame comprising at least one command string;
h) transmitting said further frame to said alarm surveillance device (ASD);
and said method further comprising, at said alarm surveillance device (ASD):
i) associating to said further frame at least one command (C) formatted according to a management protocol; and
j) transmitting said at least one command (C) to said telecommunication network (TN).

7. An alarm surveillance device (ASD) cooperating with a telecommunication network (TN) for managing alarms traveling in said telecommunication network (TN), said alarm surveillance device (ASD) being configured to:
a) detect an alarm flow (A);
b) associate to said alarm flow (A) a frame comprising at least one alarm string; and
c) transmit said frame to a management terminal (MT) connected to said alarm surveillance device (ASD).

8. A management terminal (MT) configured to cooperate with an alarm surveillance device (ASD), said alarm surveillance device (ASD) cooperating with a telecommunication network (TN) for managing alarms traveling in said telecommunication network (TN), said management terminal (MT) being configured to:
d) receive from said alarm surveillance device (ASD) a frame comprising at least one alarm string;
e) associate to said frame an alarm voice message (AVM); and
f) play said alarm voice message (AVM) by means of an audio transmitter (TA).

9. A telecommunication system (TS, TS') comprising a telecommunication network (TN), an alarm surveillance device (ASD) cooperating with said telecommunication network (TN) and a management terminal (MT) connected to said alarm surveillance device (ASD), wherein said alarm surveillance device (ASD) is according to claim 7, and wherein said management terminal (MT) is according to claim 8.
